# EUROPÄISCHE PATENTSCHRIFT

(11) **EP 0 949 094 B1**
(45) Veröffentlichungstag und Bekanntmachung des Hinweises auf die Patenterteilung: **25.02.2004**
(21) Anmeldenummer: 99106073.2
(22) Anmeldetag: 26.03.1999
(51) Int. Cl.: B60G 21/055, F15B 15/08

(54) **Fahrstabilisator für Kraftfahrzeuge**
Stabiliser for motor vehicles
Stabilisateur pour véhicules automobiles

(30) Priorität: 06.04.1998 DE 19815313
(43) Veröffentlichungstag der Anmeldung: 13.10.1999
(73) Patentinhaber: DaimlerChrysler AG, 70567 Stuttgart (DE)
(72) Erfinder: Busch, Werner, 71384 Weinstadt (DE); Rösener, Jörg, Dr., 70327 Stuttgart (DE); Speier, Wolfgang, 70619 Stuttgart (DE); Szell, Thomas, 71334 Waiblingen (DE)

(56) Entgegenhaltungen:
- EP-A- 0 428 439
- DE-A- 3 909 910
- DE-A- 4 337 813
- DE-C- 19 533 864
- FR-A- 2 455 201
- GB-A- 1 311 645
- US-A- 3 392 635

## Beschreibung

Die Erfindung betrifft einen Fahrstabilisator für Kraftfahrzeuge gemäß dem Oberbegriff des Anspruches 1.

Derartige Fahrstabilisatoren mit in der Verbindung der die Stabilisatorarme tragenden Stegteile liegendem Drehsteller sind beispielsweise aus der EP 0 428 439 A1 bekannt. Die Stegteile sind dabei in Aufnahmebuchsen der stirnseitigen Abschlussteile durch Verzahnungen formschlüssig drehfest gehalten und die Aufnahmebuchsen sind Bestandteile des durch einen Außenkörper und einen Innenkörper gebildeten Gehäuses des Drehstellers, wobei sich Außenkörper und Innenkörper axial überlappen und gegeneinander verdrehbar über eine dem Außenumfang des Innenkörpers zugeordnete Lagerung axial verspannt sind, die ringförmige Lagerbunde und eine die Lagerbunde gegeneinander verspannende Überwurfmutter umfasst. Außen- und Innenkörper, die einander übergreifen, begrenzen gemeinsam einen Innenraum, in den ausgehend vom stirnseitigen Ende des Außenkörpers ein zapfenartiger Fortsatz hineinragt, dessen Durchmesser kleiner ist als der Durchmesser des Innenraumes und der zum Außendurchmesser des Innenraumes einen Ringraum abgrenzt. In diesem liegt ein Ringkolben mit einer axial anschließenden und den Zapfen an seinem freien Ende übergreifenden Kolbenbuchse, die über ein Bodenteil geschlossen ist, derart, dass die Kolbenbuchse an ihrem einen Ende den Ringkolben und an ihrem anderen Ende eine zentrale Kolbenfläche aufweist, wobei der Ringkolben und die zentrale Kolbenfläche mit ihren jeweils voneinander abgewandten Seiten Begrenzungen von Arbeitsräumen bilden.

Die Kolbenbuchse ist radial innen und außen mit Schrägverzahnungen versehen, die entgegengerichtet gepfeilt sind und zu denen entsprechende Gegenverzahnungen an dem dem Außenkörper zugehörigen zapfenförmigen Fortsatz und an dem Innenumfang des Innenkörpers vorgesehen sind, so dass dieser relativ zum Außenkörper bei axialer Verschiebung der Kolbenbuchse verdreht wird, deren Ringkolben zwischen den radial auf den Innenraum mündenden Versorgungsanschlüssen für die Arbeitsräume liegt.

Ein derartiger Drehsteller ist im Aufbau relativ kompliziert, bedingt eine verhältnismäßig große Baulänge und macht es aufgrund seines Aufbaus nötig, für Reparatur und Montage jeweils den Fahrstabilisator insgesamt auszubauen.

Ferner sind bereits Schwenkmotoren für Fahrstabilisatoren bekannt (DE 195 33 864 C1), bei denen Außenkörper und Innenkörper einen Ringraum begrenzen, der von dem Außenkörper und dem Innenkörper wechselseitig zugeordneten axialen Flügeln in Arbeitskammern unterteilt und axial über Deckel abgeschlossen wird. Die Deckel sind jeweils drehfest mit dem Außenkörper verbunden und einer der Deckel ist mit einem Hals versehen, in den in Stegteil des Fahrstabilisators axial eingeschoben drehfest fixiert ist. Der gegenüberliegende Deckel ist von dem dem Innenkörper zugeordneten, anderen Stegteil des Fahrstabilisators durchsetzt, der in eine zentrale Aufnahme des Innenteiles eingreift und gegenüber diesem drehfest festgelegt ist. Ein derartiger Schwenkmotor baut zwar verhältnismäßig kurz, ist montagemäßig, beispielsweise im Reparaturfall aber mit verhältnismäßig großem Aufwand verbunden, da sehr tiefe Überlappungen zwischen den Stegteilen des Fahrstabilisators und dem Schwenkmotor bestehen. Ferner bedingt eine solche Konstruktion auch einen verhältnismäßig großen Dichtungsaufwand.

Einen Schwenkmotor für Stabilisatoren gleichen Grundaufbaus zeigt die DE 43 37 813 A1. Der dem Außenkörper zugeordnete Stegteil des Fahrstabilisators weist einen Flansch auf, der gegenüber dem einen der zum Außenkörper durch Verschweißen fixierten Deckel verschweißt ist. Der Flansch des gegenüberliegenden Stegteils des Fahrstabilisators ist gegen einen Flansch verschraubt, der mit dem Innenkörper des Schwenkmotors verbunden ist. Bei diesem Aufbau sind durch die Vielzahl der Schweißverbindungen zwar Dichtungsprobleme weniger zu befürchten. Dafür stellt der Schwenkmotor aber eine der Reparatur kaum noch zugängliche Wegwerfeinheit dar, die zudem mit einem der Stegteile des Fahrstabilisators durch Schweißung verbunden ist.

Durch die Erfindung soll ein Konzept für einen Fahrstabilisator mit zugeordnetem Drehsteller aufgezeigt werden, bei dem sich ein geringerer baulicher Aufwand und verbesserte Montagebedingungen ergeben.

Gemäß der Erfindung wird dies durch die Merkmale des Anspruches 1 erreicht. Hierbei wird der stirnseitige Abschluss des Drehstellers durch die als Anschlussflansche ausgebildeten Enden der Stegteile gebildet , die als Deckel an den Außenkörper als Ringmantel anschließen. Damit wird der Drehsteller zu einem Einschubelement, das als Montageeinheit alle Funktionsteile des Drehstellers umfasst und mit dem die Flansche in üblicher Weise zu verbinden sind. Durch die Doppelfunktion der Flansche als Verbindungsteile und Deckelteile wird die Baulänge und der Bauaufwand verringert. Zu letzterem trägt auch bei, dass der Außenkörper als Ringmantel und Distanzstück radial außen den Übergang zwischen den Deckeln bildet und somit zusammen mit den Deckeln das Gehäuse des Drehstellers. Ferner, dass der Außenkörper die axiale und radiale Abstützung für den achsgleich angeordneten Innenkörper bildet, der ebenso wie der Außenkörper mit einem Deckel drehfest verbunden ist. Dies ermöglicht auch für beide Deckel im Wesentlichen gleiche Anschlussmöglichkeiten.

Im Rahmen der Erfindung sind die deckelbildenden Flansche mit den Stegteilen vorzugsweise unlösbar verbunden, was durch Anschmieden der Flansche geschehen kann, bevorzugt aber durch Verweißen derselben. Besonders zweckmäßig ist des Weiteren, wenn Außenkörper und Innenkörper stirnseitig im Wesentlichen bündig enden.

Für die Abstützung des Innenkörpers gegen den Außenkörper derart, dass der Ringraum zwischen Außenkörper und Innenkörper und zwischen den Abstützungen des Innenkörpers gegen den Außenkörper liegt, ist es von besonderem Vorteil, wenn der Außenkörper radial innen axial abgestützt ist, so dass sich durch axiale Verspannung die Lagerung und axiale Fixierung des Innenkörpers im Außenkörper erreichen lässt. Bevorzugt ist dabei der Innenkörper über stirnseitig vorgesehene, radiale Ringbunde gegen die axialen und radialen Schulterflächen abgestützt.

Ein Ringraum dieser Ausgestaltung ermöglicht in vorteilhafter Weise die Aufnahme der den Ringkolben mit Buchse und zugehörigen Verzahnungen umfassenden Stellmittel in einer Ausgestaltung, bei der die Kolbenflächen im Hinblick auf möglichst geringe Arbeitsdrücke möglichst groß sind dadurch, dass der Abstand zwischen Innen- und Außenkörper im Bereich des Ringkolbens größer als im Bereich der Verzahnung ist. Dementsprechend weist der Ringbund des Innenkörpers, der dem Ringkolben benachbart ist und einen der durch diesen getrennten Arbeitsräume stirnseitig begrenzt, einen größeren Durchmesser auf als der andere Ringbund des Innenkörpers mit der Folge, dass trotz gleichen oder im Wesentlichen gleichen Außendurchmessers des Ringmantels für die Verschraubung der deckelbildenden Flansche annähernd gleich große Schraubkreisdurchmesser zur Verfügung stehen. Insbesondere ist es dadurch in vorteilhafter Weise auch platzmäßig möglich, die erforderlichen Hydraulikanschlüsse axial vorzusehen und dem Deckel zuzuordnen, der dem Ringkolben und dessen Arbeitsräumen näher liegt.

Weitere Einzelheiten und Merkmale der Erfindung ergeben sich auch den Ansprüchen. Ferner wird die Erfindung mit weiteren Details anhand der Zeichnungen näher erläutert. Es zeigen:
- Fig. 1: einen Schnitt durch einen Drehsteller gemäß der Erfindung entsprechend der Linie I-I in Figur 2,
- Fig. 2: eine Ansicht des Drehstellers gemäß Figur 1 entsprechend der Linie II-II in Figur 1 in vereinfachter Darstellung, und
- Fig. 3: eine Schnittdarstellung des in Figur 1 rechtsseitigen Endbereiches des Drehstellers in einer Schnittführung gemäß Linie III-III in Figur 2.

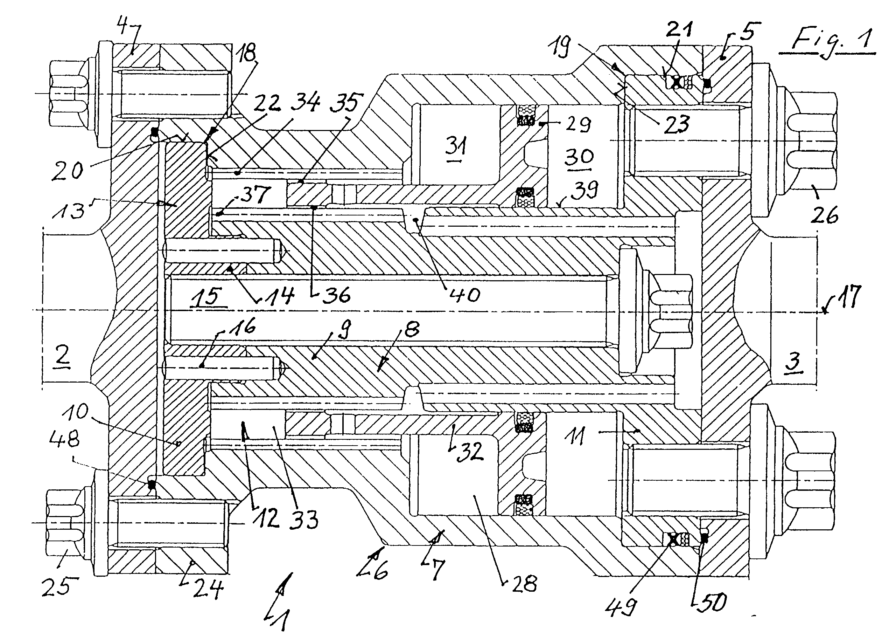

In den Figuren ist lediglich der Drehsteller eines Fahrstabilisators für Kraftfahrzeuge dargestellt, wobei davon ausgegangen ist, daß für diesen eine bekannte Gesamtanordnung gegeben ist, beispielsweise entsprechend der Darstellung in Figur 1 der EP 0458345 A2.

Der insgesamt in den Ausführungsbeispielen mit 1 bezeichnete Drehsteller liegt axial zwischen Stegteilen 2, 3 des Fahrstabilisators, und zwar bevorzugt im längsmittleren Bereich des Fahrzeuges, und die Stegteile 2, 3, von denen hier nur die Anschlußbereiche an den Drehsteller gezeigt sind, gehen an ihrem hier nicht dargestellten, gegen die Längsseiten des Fahrzeuges verlaufenden Enden in Stabilisatorarme über oder sind an diesen befestigt, die sich in grober Annäherung in Fahrzeuglängsrichtung erstrecken und Teile der jeweiligen Radführung der einander gegenüberliegenden Räder einer Achse, die durch den Fahrstabilisator verbunden sind, beaufschlagen. Die Stegteile 2, 3 sind im Ausführungsbeispiel einstückig mit Flanschen 4, 5 verbunden, die gleichzeitig Deckel bilden, welche als seitlicher, stirnseitiger Abschluß des Drehstellers 1 vorgesehen sind.

Die Funktionsteile des Drehstellers 1 sind dessen zwischen den als Deckel eingesetzten Flanschen 4, 5 liegendem Mittelteil 6 zugeordnet, das einen Außenkörper 7 und einen Innenkörper 8 umfaßt, wobei der Außenkörper 7 als Ringmantel die axiale Anlage für die Deckel 4 und 5 bildet. Im Gegensatz zum Außenkörper 7, der bevorzugt einstückig ausgebildet ist, ist der Innenkörper 8 im Ausführungsbeispiel gebaut, und er besteht im wesentlichen aus einem Mittelstück 9, das endseitig mit Ringbunden 10 und 11 versehen ist, die im Durchmesser größer sind als das Mittelstück 9 und die den zwischen den Außenkörper 7 und dem Mittelstück 9 liegenden, insgesamt mit 12 bezeichneten Ringraum axial abschließen.

Von den Ringbunden 10 und 11 ist der Ringbund 10 im Außendurchmesser kleiner als der Ringbund 11 und Bestandteil einer Scheibe 13, die gegenüber dem Mittelstück 9 über einen axial in dieses hineinragenden Führungshals 14 geführt ist, wobei die Scheibe 13 im Bereich des zentrischen Führungshalses 14 von einer zentrischen Gewindebohrung durchsetzt ist und über eine zentrale Spannschraube 15 mit dem Mittelstück 9 verspannt ist. Zusätzlich zu dieser Verspannung, die eine reibschlüssige Verbindung bedingt, ist das Mittelstück 9 mit der Scheibe 13 im Bereich des Führungshalses 14 bevorzugt über Stiftverbindungen 16 formschlüssig verbunden, so daß eine verdrehsichere, praktisch starre Verbindung zwischen dem Mittelstück 9 und der Scheibe 13 mit dem Ringbund 10 gegeben ist. Am gegenüberliegenden Ende geht das Mittelstück 9 erfindungsgemäß bevorzugt einstückig in den Ringbund 11 über, dessen radialer Durchmesser größer ist als der des Ringbundes 10. Beide Ringbunde 10 und 11, über die die axiale und radiale Führung des Innenkörpers 8 im Außenkörper 7 koaxial zu diesem erfolgt - wobei die Drehachse des Drehstellers 1 und der mit diesem verbundenen Stegteile 2, 3 mit 17 bezeichnet ist - stützen sich auf Schultern 18, 19 des Außenkörpers 7 ab, wobei die Schultern 18, 19 stirnseitig am Innenumfang des Außenkörpers 7 vorgesehen sind und radiale Lagerflächen 20, 21 sowie axiale Abstützflächen 22, 23 für die Ringbunde 10, 11 bilden. Durch die axiale Verspannung über die Spannschraube 15 ist der Innenkörper 8 insgesamt gegenüber dem Außenkörper 7 festgelegt, wobei der Innenkörper 8 über den Außenkörper 7 stirnseitig nicht hinausragt und der Außenkörper 7 quasi das Mittelteil 6 des Gehäuses des Drehstellers bildet.

Von den Deckeln 4 und 5 ist der Deckel 4, der der Stirnseite des Drehstellers 1 zugeordnet ist, an der der Ringbund 10 kleineren Durchmessers liegt, mit dem Mittelteil 6 des Gehäuses verschraubt, wobei die Verschraubung gegen einen radialen Flanschbund 24 des Mittelteiles 6 erfolgt, der sich radial nach außen erstreckt und in dem radial innen die Schulter 18 angeordnet ist. Die Verschraubung erfolgt im Ausführungsbeispiel über vier Spannschrauben 25, wobei über die Schrauben 25 eine Reibschlußverbindung zwischen dem durch den Flansch 4 gebildeten Deckel und dem Mittelteil 6 hergestellt wird.

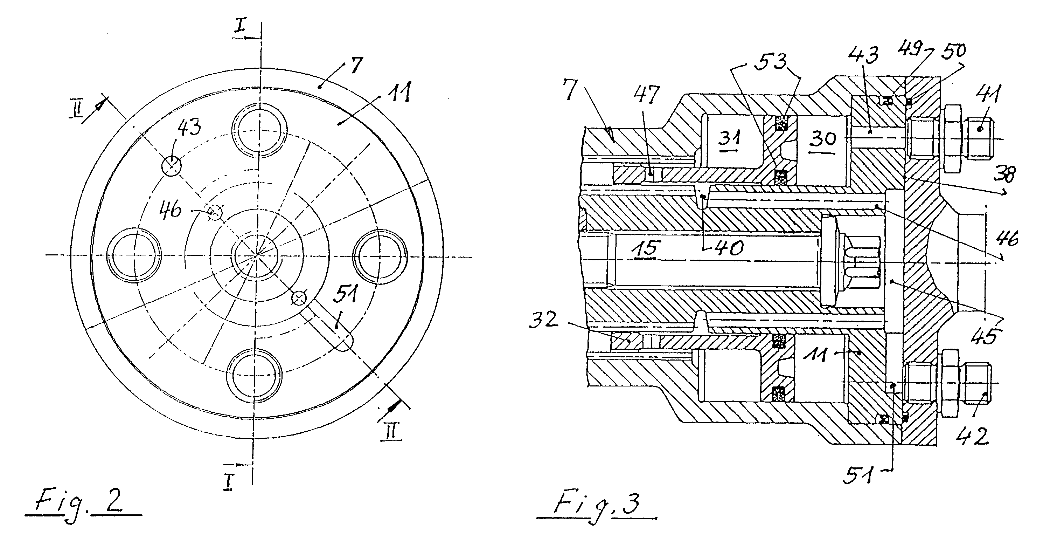

An der anderen Stirnseite des Drehstellers 1, der der Ringbund 11 größeren Durchmessers zugeordnet ist, bildet dieser Ringbund 11 die Anlagefläche für den als Deckel dienenden Flansch 5, wobei hier eine Reibschlußverbindung zwischen dem Flansch 5 und der benachbarten Stirnfläche des Ringbundes 11 über Spannschrauben 26 hergestellt wird. Die Gewindebohrungen für die Spannschrauben 26 im Ringbund 11 sind in Figur 2 mit 27 bezeichnet.

Der Ringraum 12 zwischen Außenkörper 7 und Innenkörper 8 weist über seine axiale Länge unterschiedliche Breite auf, wobei benachbart zum Ringbund 11 größeren Durchmessers der Ringraumteil 28 größerer Breite vorgesehen ist, in dem ein Ringkolben 29 mit Dichtungen 53 axial verschiebbar angeordnet ist, der den Ringraumteil 28 in zwei Arbeitskammern 30 und 31 unterteilt. Der Ringkolben 29 weist radial innen an seiner einen, der Ringbuchse 10 kleineren Durchmessers zugewandten Seite als halsartigen Fortsatz eine Buchse 32 auf, die in einen Ringraumteil 33 hineinragt, der in seiner Breite kleiner ist als der Ringraumteil 28 und in axialer Verlängerung zu diesem liegt. Der Außendurchmesser des Innenkörpers 8 im Bereich seines Mittelstückes 9 entspricht über die Länge des Mittelstückes 9 dem Innendurchmesser des Kolbens 29 und der Buchse 32, und der Außenkörper 7 ist in seinem dem Ringraumteil 33 kleinerer Breite entsprechenden Bereich radial nach innen eingezogen.

Die Buchse 32 ist im vom Ringkolben 29 abgelegenen Endbereich, was nicht im Detail dargestellt ist, in an sich bekannter Weise radial innen und radial außen jeweils mit einer Schrägverzahnung versehen, wobei diese Verzahnungen entgegengerichtet gepfeilt sind und jeweils mit einer Gegenverzahnung im Eingriff stehen, die dem Außenkörper 7 bzw. dem Innenkörper 8 zugeordnet ist. Die entsprechenden Verzahnungen sind in Figur 1 für den Außenkörper 7 mit 34, für den Außenumfang der Buchse 32 mit 35, für den Innenumfang der Buchse mit 36 und für den Außenumfang des Innenkörpers 8 mit 37 bezeichnet.

Die Verzahnung 37 ist gegenüber der am Innenkörper 8 vorgesehenen Führungsfläche 39 für den Kolben 29 axial durch eine im Außenumfang des Innenkörpers 8 vorgesehene Rinne 40 abgesetzt, die axial etwa auf Höhe der vom Ringbund 11 größeren Durchmessers abgewandten Stirnseite des Ringraumteiles 28 liegt.

Die insbesondere hydraulische Druckbeaufschlagung des Ringkolbens 29 durch Zuführung von Druckmedium auf die Arbeitskammern 30 und 31 erfolgt, wie insbesondere Figur 3 in Verbindung mit Figur 2 veranschaulicht, über axiale Anschlüsse 41, 42, die der Stirnseite des durch den Flansch 5 gebildeten, dem Ringbund 11 größeren Durchmessers benachbarten Deckels zugeordnet sind. Von diesen wird über den Anschuß 41 und die Bohrung 43 im Ringbund 11 die diesem unmittelbar benachbarte Arbeitskammer 30 versorgt, während die Arbeitskammer 31 mit dem Anschluß 42 verbunden ist. Diese Verbindung verläuft im wesentlichen innerhalb des Innenkörpers 8, wobei zentral um den Kopfraum 44 der Spannschraube 15 ein durch den Flansch 5 als Deckel abgeschlossener, im Ringbund 11 vorgesehener Verteilerraum 45 vorgesehen ist, von dem axiale Verteilerbohrungen 46 ausgehend auf die Rinne 40 ausmünden, die mit radialem Abstand vom Innenumfang der Buchse 32 überdeckt ist. In der Buchse 32 ist ferner in dem vor den Verzahnungen 35 und 36 liegenden Übergangsbereich wenigstens eine Radialbohrung 47 vorgesehen, über die die Druckflüssigkeit auf den gegenüber der Verzahnung 34 des Außenkörpers 7 radial nach innen abgesetzten Bereich der Buchse 32 austritt, und damit in den Ringraumteil 28 übertritt.

Bei der erfindungsgemäßen Lösung liegen somit die Versorgungswege innerhalb des Mittelteiles 6, so daß sich keine Leckagen ergeben können und lediglich eine Mindestzahl von Dichtungen erforderlich ist, wobei im Rahmen der Erfindung der Flansch 4 gegenüber dem Außenkörper 7 unmittelbar bevorzugt über eine Ringdichtung 48 abgedichtet ist.

Gegenüberliegend erfolgt die Abdichtung zwischen dem Ringbund 11 und dem Außenkörper 7 über die beim erfindungsgemäßen System einzige Dichtung 49 zwischen bewegten Teilen.

Ferner ist eine Ringdichtung 50 zwischen dem Flansch 5 und dem fest mit diesem verbundenen Ringbund 11 vorgesehen, so daß Einzeldichtungen im Bereich der Anschlüsse 41 und 42 vermieden werden können, wenn, wie dargestellt, der Anschluß 41 im Übergang auf die Bohrung 43 durch eine annähernd dichte Anlage zwischen Flansch 5 und der Stirnfläche 38 des Ringbundes 11 gegen den Verteilerraum 45 angeschlossen ist.

Insbesondere Figuren 2 und 3 zeigen, daß der Anschluß 42 mit dem Verteilerraum 45 über einen Stichkanal 51 verbunden ist, der in die dem Flansch 5 zugeordnete Stirnfläche 38 des Ringbundes 11 eingearbeitet ist.

Durch die Erfindung wird aufbauend auf dem zum Beispiel durch die EP 0428439 A1 bekannten Verstellprinzip ein Drehversteller geschaffen, der sich durch sehr kompakte Bauweise und sehr günstige Montagevoraussetzungen auszeichnet, wobei durch die Verwendung der Anschlußflansche 4 und 5 der Stegteile 2 und 3 als Deckel zudem eine weitere Vereinfachung und eine besonders kompakte und kurze Bauweise erreicht wird. Desweiteren zeichnet sich die erfindungsgemäße Lösung dadurch aus, daß nur interne Ölkanäle vorgesehen sind, somit unter Dichtungsgesichtspunkten ebenfalls eine sehr günstige Konstruktion gegeben ist. Diese ermöglicht zudem axiale Anschlüsse, wie sie im Hinblick auf die Raumverhältnisse an Fahrzeugen besonders vorteilhaft sind.

Die zugeordneten Steuereinrichtungen zur Beaufschlagung der Arbeitsräume mit Druckflüssigkeit sind nicht weiter dargestellt, können aber in üblicher Weise durch Wegeventile gebildet sein. Bei einer bevorzugten Lösung ist jeweils ein 3/2 Wegeventil, insbesondere ein Proportional-Ventil vorgesehen, so daß eine Einsteuerung beliebiger Lagen, so insbesondere auch einer Mittellage möglich ist. In der Mittellage können die Anschlüsse gesperrt sein, so daß der Drehsteller als starres Verbindungsstück zwischen den an ihn angeschlossenen Stegteilen wirkt.

Ferner kann aber auch die Mittellage als Schwimmstellung eingesteuert werden, so daß die Stegteile frei gegeneinander beweglich sind. Es lassen sich somit, entsprechend vorgegebenen Fahrprogrammen oder auch frei wählbar, die über einen Fahrstabilisator beeinflußbaren Fahrwerkseffekte nach Vorgaben oder frei wählbar nutzen.

In Verbindung hiermit kann es im Rahmen der Erfindung weiterhin zweckmäßig sein, die Verzahnungen so auszubilden, daß sich ein Selbsthemmeffekt ergibt, also eine Verdrehung der Stegteile gegeneinander nur über aktive Beaufschlagung des Stellkolbens möglich ist.

Durch die Zusammenfassung der Funktionsteile des Drehstellers in einem Mittelteil 6, das zwischen die Flanschteile 4, 5 radial einschiebbar ist, ergeben sich auch sehr günstige Voraussetzungen für etwaige Wartungs- und Reparaturarbeiten.

## Patentansprüche

1. Fahrstabilisator für Kraftfahrzeuge mit seitlichen, verschwenkbaren Stabilisatorarmen und in deren Querverbindung liegenden Stegteilen (2, 3), die über einen zwischen ihnen liegenden Drehsteller (1) verbunden sind, der achsgleich zu den Stegteilen (2, 3) liegt, wobei der Drehsteller:
- einen Außenkörper (7) und einen Innenkörper (8) aufweist, die gegeneinander verdrehbar und axial zueinander abgestützt sind und die jeweils über ein stirnseitiges Abschlussteil (4, 5) des Drehstellers (1) mit einem der Stegteile (2, 3) drehfest verbunden sind;
- einen in einem Ringraum (12) beidseitig druckbeaufschlagbaren, axial verstellbaren Ringkolben (29) aufweist, der mit einer sich axial erstreckenden Buchse (32) versehen ist, wobei die Buchse (32) radial innen und radial außen verzahnt ist und die Verzahnungen (35, 36) der Buchse (32) durch gegengesetzt gepfeilte Schrägverzahnungen gebildet sind, die mit am Außenkörper (7) und am Innenkörper (8) vorgesehenen Gegenverzahnungen (34, 37) kämmen,
**dadurch gekennzeichnet,**
**dass** die Abschlussteile des Drehstellers (1) durch die als Anschlussflansche (4, 5) ausgebildeten Enden der Stegteile (2, 3) gebildet sind und als Deckel an den Außenkörper (7) anschließen, dass der Außenkörper (7) den Abstand zwischen den Deckeln als den Innenkörper (8) umschließendem Ringmantel überbrückt, der zum Innenkörper (8) den Ringraum (12) abgrenzt, und dass der den Ringkolben (29) aufnehmende Ringraum (12) zwischen den Abstützungen des Außenkörpers (7) für den Innenkörper (8) liegt.

2. Fahrstabilisator nach Anspruch 1,
**dadurch gekennzeichnet,**
**dass** der zwischen den Deckeln (4, 5) liegende Teil des Drehstellers (1) als Montageeinheit ausgebildet ist, die die Funktionsteile des Drehstellers aufnimmt.

3. Fahrstabilisator nach Anspruch 1 oder 2,
**dadurch gekennzeichnet,**
**dass** die deckelbildenden Flansche (4, 5) mit den Stegteilen (2, 3) unlösbar verbunden sind.

4. Fahrstabilisator nach Anspruch 3,
**dadurch gekennzeichnet,**
**dass** die Flansche (4, 5) mit den Stegteilen (2, 3) einstückig ausgebildet sind.

5. Fahrstabilisator nach einem der vorhergehenden Ansprüche,
**dadurch gekennzeichnet,**
**dass** Außenkörper (7) und Innenkörper (8) stirnseitig nahezu bündig enden.

6. Fahrstabilisator nach einem der vorhergehenden Ansprüche,
**dadurch gekennzeichnet,**
**dass** der Außenkörper (7) stirnseitig jeweils radial innen axial abgesetzte Schultern (18, 19) aufweist, gegen die der Innenkörper (8) axial abgestützt ist.

7. Fahrstabilisator nach Anspruch 6,
**dadurch gekennzeichnet,**
**dass** der Innenkörper (8) auf axial verlaufenden Ringflächen (Lagerflächen 20, 21) der Schultern (18, 19) gelagert ist.

8. Fahrstabilisator nach einem der Ansprüche 6 oder 7,
**dadurch gekennzeichnet,**
**dass** der Innenkörper (8) über stirnseitig vorgesehene, radiale Ringbunde (10, 11) gegen die axialen Flächen (21, 22) und die radialen Flächen (23, 24) der Schultern (18, 19) abgestützt ist.

9. Fahrstabilisator nach einem der vorhergehenden Ansprüche,
**dadurch gekennzeichnet,**
**dass** die dem Ringkolben (29) zugeordnete Buchse (32) an ihrem freien Endbereich mit den Verzahnungen (35, 36) versehen ist und in ihrem daran anschließenden, gegen den Ringkolben (29) verlaufenden Bereich gegenüber Innenkörper (8) und Außenkörper (7) Ölführungen abgrenzt, die mit der buchsenseitigen, dem Ringkolben (29) zugeordneten Arbeitskammer (31) verbunden sind.

## Claims

1. A stabiliser bar for motor vehicles having lateral, pivoting stabiliser arms with struts (2, 3) in their cross connection which are connected by means of a rotating actuator (1) positioned between them which lies on the same axis as the struts (2, 3), the rotating actuator:
- having an outer body (7) and an inner body (8) which can be rotated against one another and are supported axially in relation to one another, each of said bodies (7 and 8) being connected via a front end connecting part (4, 5) of the rotating actuator (1) to one of the struts (2, 3) in such a manner that they are unable to rotate;
- having an axially adjustable annular piston (29) to which pressure can be applied from both sides in an annular space (12) and which is provided with an axially extending bushing (32), said bushing (32) having radial toothed sections on the inside and the outside and said toothed areas (35, 36) of the bushing (32) taking the form of helical toothed sections running in opposite directions which engage with mating toothed sections provided on the inner body (7) and the outer body (8),
**characterised in that**
the closing parts of the rotating actuator (1) are formed by the ends of the struts (2, 3) which are designed as connecting flanges (4, 5) and are positioned adjacent to the outer body (7) as a cover, that the outer body (7) bridges the gap between the covers in the form of an annular casing encompassing the inner body (8) said annular casing delimiting the annular space (12) in relation to the inner body (8), and that the annular space (12) receiving the annular piston (29) lies between the supports for the outer body (7) and for the inner body (8).

2. A stabiliser bar in accordance with claim 1,
**characterised in that**
the part of the rotating actuator (1) lying between the covers (4, 5) is designed as an assembly which receives the functional parts of the rotating actuator.

3. A stabiliser bar in accordance with claim 1 or 2,
**characterised in that**
the flange (4, 5) which forms the cover is connected non-detachably to the struts (2, 3).

4. A stabiliser bar in accordance with claim 3,
**characterised in that**
the flange (4, 5) is designed as one piece with the struts (2, 3).

5. A stabiliser bar in accordance with one of the preceding claims,
**characterised in that**
the outer body (7) and the inner body (8) end almost flush at the front end.

6. A stabiliser bar in accordance with one of the preceding claims,
**characterised in that**
the outer body (7) has shoulders (18, 19) which are stepped axially radially inwards at the front end on which the inner body (8) is supported axially.

7. A stabiliser bar in accordance with claim 6,
**characterised in that**
the inner body (8) is mounted on axially running annular surfaces (bearing surfaces (20, 21)) on the shoulders (18, 19).

8. A stabiliser bar in accordance with one of claims 6 or 7,
**characterised in that**
the inner body (8) is supported on radial annular collars (10, 11) provided at the front end against the axial surfaces (21, 22) and the radial surfaces (23, 24) of the shoulders (18, 19).

9. A stabiliser bar in accordance with one of the preceding claims,
**characterised in that**
the free end area of the bushing (32) associated with the annular piston (29) is provided with toothed sections (35, 36) while the adjacent area of said bushing (32) running away from the annular piston (29) delimits oil lines from the inner body (8) and the outer body (7), said oil lines being connected to the working space (31) positioned on the bushing side associated with the annular piston (29).

## Revendications

1. Stabilisateur pour véhicules automobiles, comportant des bras stabilisateurs latéraux mobiles en pivotement et des éléments formant âme (2, 3) situés dans leur liaison transversale, qui sont reliés via un actuateur rotatif (1) disposé entre eux et situé coaxialement aux éléments formant âme (2, 3), l'actuateur rotatif comprenant :
- un corps extérieur (7) et un corps intérieur (8) qui sont mobiles en rotation l'un par rapport à l'autre et supportés axialement l'un par rapport à l'autre et qui sont reliés chacun solidairement en rotation à l'un des éléments formant âme (2, 3) via une pièce de fermeture (4, 5) côté frontal de l'actuateur rotatif (1) ;
- un piston annulaire (29) axialement déplaçable et susceptible d'être sollicité en pression sur les deux côtés dans une chambre annulaire (12), qui est pourvu d'une douille (32) qui s'étend axialement, la douille (32) étant dentée radialement à l'intérieur et radialement à l'extérieur et les dentures (35, 36) de la douille (32) étant formées par des dentures obliques en flèches opposées, qui engrènent avec des dentures complémentaires (34, 37) prévues sur le corps extérieur (7) et sur le corps intérieur (8),
**caractérisé en ce que**
les pièces de fermeture de l'actuateur rotatif (1) sont formées par les extrémités, réalisées sous forme de brides de raccordement (4, 5), des éléments formant âme (2, 3) et se raccordent à titre de couvercle au corps extérieur (7), **en ce que** le corps extérieur (7) comble la distance entre les couvercles en faisant office d'enveloppe annulaire entourant le corps intérieur (8) et délimitant la chambre annulaire (12) par rapport au corps intérieur (8), et **en ce que** la chambre annulaire (12) recevant le piston annulaire (29) se trouve entre les supports du corps extérieur (7) pour le corps intérieur (8).

2. Stabilisateur selon la revendication 1, **caractérisé en ce que** la partie de l'actuateur rotatif (1) située entre les couvercles (4, 5) est réalisée sous la forme d'une unité de montage qui reçoit les éléments fonctionnels de l'actuateur rotatif.

3. Stabilisateur selon l'une ou l'autre des revendications 1 et 2, **caractérisé en ce que** les brides (4, 5) formant couvercle sont reliées de façon non détachable aux éléments formant âme (2, 3).

4. Stabilisateur selon la revendication 3, **caractérisé en ce que** les brides (4, 5) sont réalisées d'un seul tenant avec les éléments formant âme (2, 3).

5. Stabilisateur selon l'une des revendications précédentes, **caractérisé en ce que** le corps extérieur (7) et le corps intérieur (8) se terminent du côté frontal pratiquement en affleurement.

6. Stabilisateur selon l'une des revendications précédentes, **caractérisé en ce que** le corps extérieur (7) présente du côté frontal des épaulements (18, 19) chacun axialement en retrait radialement à l'intérieur, contre lesquels prend appui axialement le corps intérieur (8).

7. Stabilisateur selon la revendication 6, **caractérisé en ce que** le corps intérieur (8) est monté sur des surfaces annulaires (surfaces de palier 20, 21) des épaulements (18, 19), surfaces qui s'étendent axialement.

8. Stabilisateur selon l'une ou l'autre des revendications 6 et 7, **caractérisé en ce que** le corps intérieur (8) prend appui contre les surfaces axiales (21, 22) et contre les surfaces radiales (23, 24) des épaulements (18, 19) via des collerettes annulaires radiales (10, 11) prévues du côté frontal.

9. Stabilisateur selon l'une des revendications précédentes, **caractérisé en ce que** la douille (32) associée au piston annulaire (29) est pourvue des dentures (35, 36) sur sa zone d'extrémité libre et délimite dans sa zone qui s'y raccorde et qui s'étend contre le piston annulaire (29), des guidages à huile qui sont reliés à la chambre de travail (31) côté douille associée au piston annulaire (29).
